# DEMANDE DE BREVET EUROPEEN

(11) **EP 0 440 560 A2**
(43) Date de publication de la demande: **07.08.1991**
(21) Numéro de dépôt: 91400233.2
(22) Date de dépôt: 31.01.1991
(51) Int. Cl.: C08L 23/16, C08L 29/04

(54) **Procédé de production d'articles façonnés ayant une excellent résistance au choc**

(30) Priorité: 01.02.1990 JP 23020/90
(71) Demandeur: ELF ATOCHEM S.A., F-92800 Puteaux (FR)
(72) Inventeur: Asano, Kuniyoshi, Hirakata (JP); Uemura, Tomoyoshi, Ibaraki (JP); Takida, Hiroshi, Takatsuki (JP)

(57) **Abrégé**

L'invention concerne un procédé de production d'articles façonnés par moulage d'une composition comprenant :
- 50 à 99,5 % en poids d'un copolymère éthylène-acétate de vinyle saponifié,
- 0,4 à 50 % en poids d'un élastomère copolymère éthylène-propylène et
- 0,1 à 15 % en poids d'un agent compatibilisant défini dans la description.

## Description

La présente invention concerne un procédé de production d'articles façonnés de grande qualité par moulage d'une composition comprenant un copolymère éthylène-acétate de vinyle saponifié et un élastomère copolymèrée thylène-propylène incorporé dans ledit copolymère saponifié.

Les copolymères éthylène-acétate de vinyle saponifiés sont bien meilleurs, en ce qui concerne la rigidité, la dureté, la résistance à l'usure, la propriété antistatique et d'autres aspects, que d'autres résines à mouler, mais présentent l'inconvénient que leur résistance au choc n'est pas satisfaisante.

Pour surmonter un tel inconvénient, on a pris des mesures qui consistent à incorporer dans lesdits copolymères saponifiés des résines synthétiques, comme un copolymère styrène-butadiène et un copolymère acrylonitrile-butadiène, des élastomères polyesters, des résines d'uréthanne thermoplastiques et des copolymères de l'éthylène.

Cependant, les mesures de l'art antérieur ne sont pas toujours satisfaisantes du point de vue de l'effet d'amélioration de la résistance au choc. Par exemple, lorsqu'on utilise des caoutchoucs synthétiques, ils peuvent subir une décomposition thermique au cours du moulage ou donner des articles façonnés ayant une résistance aux intempéries insuffisante. Lorsqu'on utilise des élastomères polyesters, les articles façonnés peuvent présenter des problèmes de résistance aux agents chimiques.

En outre, les uréthannes thermoplastiques sont désavantageux en ce qu'ils causent des hausses marquées de viscosité au cours du moulage. Les copolymères de l'éthylène ne conviennent pas pour une moulabilité en grande série. Ainsi, actuellement, aucun procédé de l'art antérieur ne peut améliorer la résistance au choc desdits copolymères saponifiés dans une mesure satisfaisante.

A l'issue de leurs recherches intensives pour résoudre ces problèmes, les présents inventeurs ont découvert que les buts de l'invention peuvent être atteints si l'on moule en fusion une composition dérivée d'un copolymère éthylène-acétate de vinyle saponifié (A) par incorporation dans celle-ci d'un élastomère copolymèreé éthylène-propylène (B) et d'un polymère greffé (C) obtenu par greffage d'un acide carboxylique à insaturationé thylénique ou d'un de ses dérivés sur une résine de polyoléfine et par réaction du produit de greffage résultant avec un oligomère de polyamide. La présente invention a été réalisée sur la base de ces découvertes et d'autres.

Le copolymère éthylène-acétate de vinyle saponifié (A) que l'on doit employer selon la présente invention doit avoir une teneur en éthylène de 20 à 60% en moles, de préférence de 25 à 55% en moles, le degré de saponification de son composant acétate de vinyle n'étant pas inférieur à 95% en moles.

Avec une teneur en éthylène inférieure à 20% en moles, la résistance à l'eau n'est pas aussi élevée qu'on le souhaite, tandis qu'une teneur en éthylène dépassant 60% en moles conduit à des baisses de la rigidité, de la résistance à l'usure et d'autres propriétés physiques. Lorsque le degré de saponification ou d'hydrolyse est inférieur à 95% en moles, la rigidité, la dureté et la résistance à l'eau sont sacrifiées.

Il est entendu que ce copolymère saponifié peut contenir de faibles proportions d'autres ingrédients comonomères, y compris des α-oléfines telles que propylène, isobutène, α-octène, α-dodécène, α-octadécène, etc., des acides carboxyliques insaturés ou leurs sels, des esters alkyliques partiels, des esters alkyliques complets, des nitriles, des amides et des anhydrides de ces acides, et des acides sulfoniques insaturés ou leurs sels.

L'élastomère copolymère éthylène-propylène (B) est un élastomère copolymère ayant une teneur en éthylène de 30 à 90% en poids et les espèces ayant une masse volumique d'environ 0,85 à 0,87 g/cm³ et un point de transition vitreuse dans l'intervalle de -50°C à -60°C conviennent dans la plupart des cas pour être utilisées.

Il est aussi possible d'utiliser un terpolymère produit par copolymérisation d'éthylène, de propylène et d'un monomère diénique (troisième composant).

Pour améliorer la compatibilité entre (A) et (B), l'incorporation de (C) est essentielle à la mise en oeuvre de l'invention.

Le composant (C) est un polymère greffé que l'on obtient en greffant un acide carboxylique à insaturationé thylénique ou un de ses dérivés à une résine de polyoléfine et en faisant réagir cet acide carboxylique ou dérivé avec un oligomère de polyamide.

On peut produire ce polymère greffé en dissolvant ou en mettant en suspension une résine de polyoléfine dans un solvant approprié ou en la mettant à l'état fondu, en activant la chaîne de résine de polyoléfine avec un initiateur de type peroxyde ou diazoïque, en y greffant un acide carboxylique à insaturation éthylénique ou un de ses dérivés pour obtenir un polymère et en mélangeant ce polymère avec un oligomère de polyamide à l'état fondu.

Pour cette réaction, on emploie une machine de Brabender, un malaxeur de Buss, une extrudeuse monovis, une extrudeuse bivis de Werner et Pfleiderer ou analogue.

Le degré de polymérisation de la résine de polyoléfine à employer est d'environ 350 à 45 000, et de préférence d'environ 500 à 1 000. L'indice de fluidité à chaud (230°C; charge 2160 g; même chose dans la suite) est d'environ 0,1 à 50 g/10 minutes pour toutes les utilisations pratiques.

Le rapport réactionnel de la résine de polyoléfine à l'acide carboxylique à insaturation éthylénique ou son dérivé est de 100/0,05 à 100/10, et de préférence de 100/0,5 à 100/3, exprimé sur une base pondérale.

Si le rapport est de 100/moins de 0,05, l'effet améliorant sur la compatibilité n'est pas suffisant. D'autre part, si le rapport est de 100/plus de 10, la viscosité est trop élevée pour un moulage pratique.

Le degré de polymérisation dudit oligomère de polyamide est de 5 à 80, de préférence d'environ 15 à 55, pour toutes les utilisations pratiques, et le rapport réactionnel est de 0,01 à 1 mole, et de préférence de 0,5 à 0,9 mole, par mole du groupe carboxyle.

Comme exemples de la résine de polyoléfine, on peut citer un polyéthylène linéaire basse densité, un polyéthylène moyenne densité ou haute densité, des ionomères, un copolymère éthylène-propylène, un copolymèreé thylène-ester acrylique, un copolymère éthylène-acétate de vinyle, etc. Ceux qui sont importants pour les applications pratiques sont un polyéthylène linéaire basse densité, un polyéthylène basse densité, un copolymèreé thylène-propylène et un copolymère éthylène-acétate de vinyle.

L'acide carboxylique à insaturation éthylénique ou son dérivé à greffer à ce polymère principal englobe, entre autres, les acides carboxyliques insaturés comme l'acide acrylique, l'acide méthacrylique, l'acide crotonique, l'acide maléique, l'acide fumarique et l'acide itaconique, et les anhydrides ou semi-esters correspondants.

L'oligomère de polyamide peut être préparé par des procédés connus comme la polymérisation d'addition d'un lactame, la polycondensation d'un acide aminocarboxylique, la polycondensation d'une diamine avec un acide dicarboxylique, etc.

Des exemples des produits de départ pour ledit oligomère de polyamide sont divers lactames comme l'ε-caprolactame, l'énantholactame, le caprylolactame, le laurolactame, l'α-pyrrolidone, l'α-pipéridone, etc., les ω -aminoacides comme l'acide 6-aminocaproïque, l'acide 7-aminoheptanoïque, l'acide 9-aminononanoïque, l'acide 11-aminoundécanoïque, etc., les diacides comme l'acide adipique, l'acide glutarique, l'acide pimellique, l'acide subérique, l'acide azélaïque, l'acide sébacique, l'acide undécadioïque, l'acide dodécadioïque, l'acide hexadécadioïque, l'acide hexadécènedioïque, l'acide éicosadioïque, l'acide éicosadiènedioïque, l'acide diglycolique, l'acide 2,2,4-triméthyladipique, l'acide xylylènedicarboxylique, l'acide 1,4-cyclohexanedicarboxylique, l'acide téréphtalique, l'acide isophtalique, etc., et les diamines comme l'hexaméthylènediamine, la tétraméthylènediamine, la nonaméthylènediamine, l'undécaméthylènediamine, la dodécaméthylènediamine, la 2,2,4-(ou 2,4,4-)triméthylhexaméthylènediamine, le bis(4,4′-aminocyclohexyl)méthane, la métaxylylènediamine, etc. Pour la régulation de la masse moléculaire, on peut aussi utiliser une monoamine comme la laurylamine ou l'oléylamine en une quantité appropriée.

Dans la composition de la présente invention, la proportion de (A) doit être de 50 à 99,5% en poids et de préférence de 60 à 95% en poids, celle de (B) doit être de 0,4 à 50% en poids et de préférence de 4,5 à 35% en poids, et celle de (C) doit être de 0,1 à 15% en poids et de préférence de 0,5 à 10% en poids.

Lorsque la proportion de (A) est inférieure à 50% en poids ou que celle de (B) est supérieure à 50% en poids, cela a une incidence défavorable sur la rigidité, la dureté et la résistance à l'usure. Inversement, lorsque la proportion de (A) est supérieure à 99,5% en poids ou que celle de (B) est inférieure à 0,4% en poids, l'effet d'amélioration de la résistance au choc n'est pas suffisant. Lorsque la proportion de (C) est inférieure à 0,1% en poids, la compatibilité entre (A) et (B) est faible, ce qui fait que l'effet d'amélioration de la résistance au choc diminue. Inversement, lorsque la proportion de (C) dépasse 15% en poids, cela a une incidence défavorable sur la moulabilité en grande série.

La composition indiquée ci-dessus est soumise, telle quelle, à un moulage pour donner des articles façonnés souhaités ou est d'abord transformée en pastilles puis moulée en articles façonnés souhaités.

Le procédé de moulage en fusion n'est pas limité une technique particulière, mais peut englober le moulage par injection, le moulage par extrusion, le moulage par compression, le moulage par rotation, le moulage par soufflage, le trempage en lit fluidisé, etc.

La température de la résine moulée doit être avantageusement dans l'intervalle d'environ 170 à 260°C, pour que la résine puisse conserver une coulabilité adéquate et pour éviter en même temps une décomposition thermique. Dans le moulage en fusion, il est possible d'incorporer, si nécessaire, des additifs connus, comme un stabilisant, un plastifiant, une charge, un colorant, un agent moussant, un adjuvant, etc., et/ou des renforts connus, comme de la fibre de verre, de la fibre de carbone, etc., dans la composition selon l'invention.

Les articles façonnés obtenus par le procédé indiqué ci-dessus peuvent être utilisés dans différents domaines d'application, par exemple comme pièces pour machines générales, appareils ou appareils ménagers, pièces pour automobiles, bâteaux ou avions, pièces pour les instruments optiques ou chronographiques, pièces pour les appareils électriques, etc.

De plus, les articles façonnés selon l'invention sont utiles comme matériaux d'emballage, comme des feuilles, des films et des bouteilles. Dans une telle utilisation, la propriété d'imperméabilité à l'oxygène du copolymère éthylène-acétate de vinyle saponifié peut être mise en évidence comme étant une propriété caractéristique.

Dans une telle utilisation, les articles façonnés selon l'invention sont utilisés non seulement sous la forme d'articles façonnés à une seule couche, mais aussi sous la forme de stratifiés en combinaison avec diverses résines thermoplastiques comme les polyoléfines, les polyesters, les nylons, etc. Les articles façonnés peuvent être étirés uniaxialement ou biaxialement pour leur utilisation pratique, le cas échéant.

### Effets

Selon la présente invention, la résistance au choc du copolymère éthylène-acétate de vinyle saponifié (A) peut être nettement améliorée si l'on y incorpore l'élastomère copolymère éthylène-propylène (B) et le polymère greffé spécifique (C).

### Exemples

Les exemples suivants constituent une autre illustration de la composition de la présente invention. Dans la description qui suit, toutes les parties et tous les % sont en poids, sauf indication contraire.
Préparation des échantillons

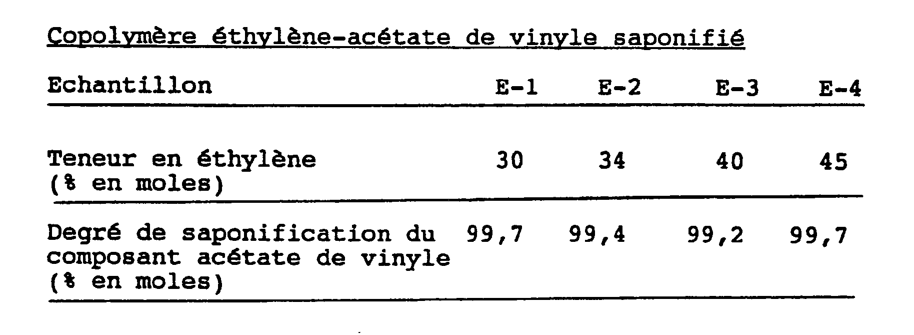

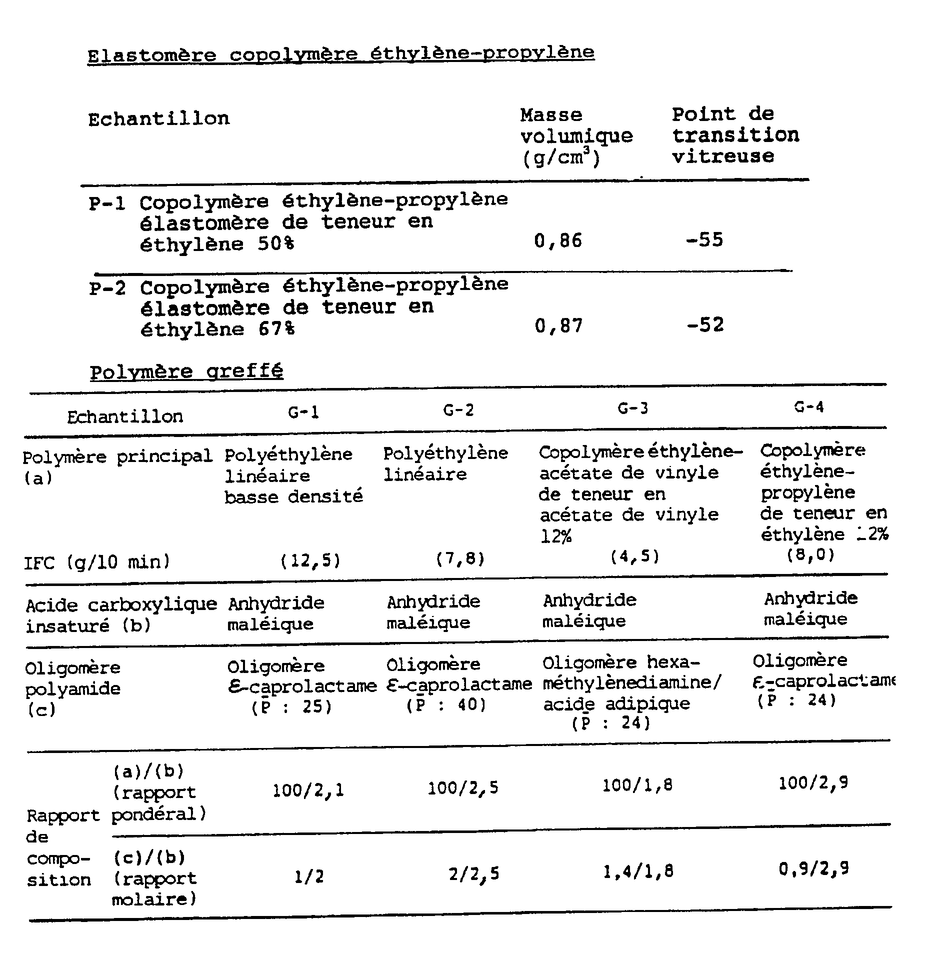

### Exemples 1 à 10 et exemples comparatifs 1 et 2

Les compositions de (A), (B) et (C) indiquées sur le tableau 1 sont bien mélangées sous forme de poudre dans un malaxeur Henschel, puis séchées dans une enceinte de séchage à air chaud et introduites dans une machine de moulage par injection (poids de la charge 3,5 onces) pour un moulage par injection dans les conditions de moulage suivantes : température de la tuyère 220°C, température avant 200°C, température arrière 22°C, température du moule °C, pression d'injection 1 200 kg/cm et cycle de 35 secondes.

Sur les éprouvettes ainsi obtenues, on mesure les propriétés physiques. Les résultats sont indiqués sur le tableau 1.

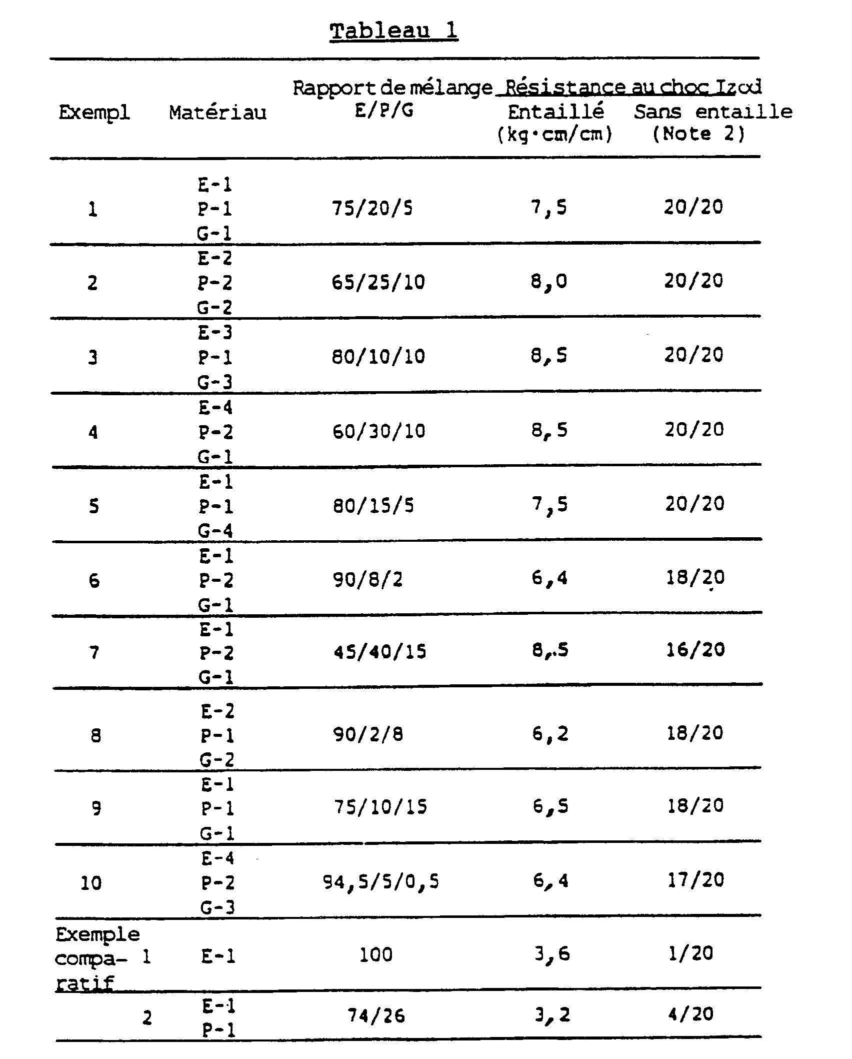

Note 1) Les mesures de résistance au choc sont faites après que l'on ait maintenu les éprouvettes dans une condition sèche absolue à 20°C, suivant ASTM 0256.
Note 2) Nombre de survivants/nombre d'essais.

## Revendications

1. Procédé de production d'articles façonnés ayant une excellente resistance au choc, qui comprend le moulage en fusion d'une composition derivée d'un copolymère éthylène-acétate de vinyle saponifie (A) par incorporation dans celle-ci d'un élastomère copolymère ethylène-propylène (B) et d'un polymère greffé (C) obtenu par greffage d'un acide carboxylique à insaturationé thylénique ou d'un de ses dérivés sur une résine de polyoléfine et par réaction du produit de greffage résultant avec un oligomère de polyamide.

2. Procédé selon la revendication 1, dans lequel la proportion du copolymère ethylène-acétate de vinyle saponifié (A) est de 50 à 99,5% en poids, celle de l'élastomère (B) est de 0,4 à 50% en poids et celle du polymère greffé (C) est de 0,1 à 15% en poids.
